# FASCICULE DE BREVET EUROPEEN

(11) **EP 2 127 272 B1**
(45) Date de publication et mention de la délivrance du brevet: **10.07.2019**
(21) Numéro de dépôt: 08762084.5
(22) Date de dépôt: 13.02.2008
(51) Int. Cl.: H04L 12/58

(54) **PROCEDE ET DISPOSITIF DE RESTITUTION D'INFORMATIONS D'ETAT**
VERFAHREN UND VORRICHTUNG ZUR WIEDERGABE VON ZUSTANDSINFORMATIONEN
METHOD AND DEVICE FOR RESTITUTING STATE INFORMATION

(30) Priorité: 28.02.2007 FR 0701607
(43) Date de publication de la demande: 02.12.2009
(73) Titulaire: Orange, 75015 Paris (FR)
(72) Inventeur: DESCHARMES, Elodie, F-22560 Pleumeur Bodou (FR); GUEGAN, Delphine, F-35830 Betton (FR)
(74) Mandataire: Cabinet Beau de Loménie
(86) Numéro de dépôt international: PCT/FR2008/050234
(87) Numéro de publication internationale: WO 2008/107619

(56) Documents cités:
- WO-A-03/098449
- WO-A1-03/056799
- US-A1- 2005 228 882

## Description

La présente invention se situe dans le domaine des télécommunications et trouve une application particulièrement avantageuse dans la sphère des objets communicants connectés à un réseau.

Les objets communicants concernés par l'invention peuvent, entre autres, être des objets lumineux susceptibles de délivrer une information simple et intuitive, et plus généralement tout objet communicant connecté, par exemple via un terminal, à au moins un réseau de communication.

Plus précisément, l'invention concerne la restitution d'informations relatives à l'état d'un ensemble de contacts, ou correspondants, par exemple un état de disponibilité, au travers d'un ou de plusieurs réseaux de communication, et en particulier de réseaux informatiques, par exemple de type Internet.

Par l'expression « état de disponibilité », on entend notamment dans le cadre de la présente invention une indication, d'une part, de la connexion ou non de chaque correspondant à un réseau de communication et, d'autre part, dans l'affirmative, de sa disponibilité effective.

Pour un utilisateur d'un service de communication qui souhaite savoir si le ou les membre(s) d'une liste de contacts sont disponibles, une première technique connue consiste à tenter de contacter l'un après l'autre chaque membre de la liste, encore appelé correspondant ou interlocuteur.

Un inconvénient de cette première technique est, bien sûr, que l'utilisateur doit effectuer la démarche d'appeler chaque correspondant dont il veut connaître la disponibilité.

Une deuxième technique connue consiste à utiliser, à partir d'un ordinateur, un service de messagerie instantanée, encore appelé messagerie en temps réel (ou en anglais « Instant Messaging »), ou encore un service mutualisant plusieurs services de messagerie instantanée mis à disposition par une pluralité de fournisseurs d'Instant Messaging, pour consulter la liste des correspondants connectés et avec lesquels l'utilisateur peut immédiatement communiquer.

Un inconvénient de cette deuxième technique connue est que l'utilisateur doit utiliser un ordinateur, et ouvrir une session, ce qui nécessite notamment que cet ordinateur soit sous tension, et dans le cas contraire de l'allumer et d'ouvrir une session. L'utilisateur doit en outre être présent devant son ordinateur, et maîtriser l'application concernée. Le document WO 03/098449 A1 divulgue un procédé de notification de changement dans la présence en temps réel.

Le document US2005/228882 A1 divulgue un procédé dans lequel le status d'un utilisateur est déduite automatiquement.

L'invention offre une solution qui ne présente pas ces inconvénients, grâce à un procédé de restitution d'informations d'état relatives à au moins deux correspondants d'un utilisateur, le procédé mis en oeuvre par un dispositif de restitution sans écran d'ordinateur comprend les étapes suivantes :
- obtention d'une information d'état représentative d'un état d'au moins un desdits correspondants, au moyen d'au moins un dispositif de collecte automatique d'informations d'état ;
- transformation de l'information obtenue d'état en une commande apte à piloter un dispositif de restitution comprenant au moins deux entités affectées chacune à un desdits correspondants ;
- génération, par une desdites entités, d'au moins un stimulus représentatif de l'état du correspondant auquel elle est affectée, en fonction de la commande correspondante, pour informer ledit utilisateur de l'état dudit au moins un correspondant.

Ainsi, de façon nouvelle et inventive, l'invention met à la disposition et/ou informe un utilisateur, ou un ensemble d'utilisateurs, de l'état de ses correspondants, par exemple de leur état de disponibilité ou de joignabilité, sans nécessiter d'entrer en contact direct avec le ou les correspondant(s) (et donc sans s'introduire dans la vie de ces correspondants).

Le mode de communication proposé par l'invention est simple et pratique, notamment par le fait qu'il ne contraint pas un utilisateur à devoir connecter un ordinateur à un réseau de communication ni même à posséder un ordinateur. En outre, l'invention se distingue des techniques connues par une exploitation d'informations aisément disponibles, recueillies nécessairement et automatiquement par le dispositif de collecte qui pourra par exemple être inclus dans une plateforme de messagerie instantanée.

Par ailleurs, la forme de restitution opérée par les entités peut permettre à l'utilisateur, dans différents modes de réalisation particuliers de l'invention, d'interpréter intuitivement l'information d'état, sans qu'il soit nécessaire de consulter une fenêtre sur un écran d'ordinateur.

Ainsi, un dispositif de restitution tel que celui décrit ci-dessus pourra être mis à disposition d'un conseiller bancaire et avoir alors vocation à afficher des états créditeurs ou débiteurs de comptes bancaires associés à des clients dudit conseiller, un état "créditeur" étant intuitivement déductible d'un affichage en vert du nom du client correspondant, dont un état "débiteur" serait *a contrario* intuitivement déductible d'un affichage en rouge dudit nom.

Les stimuli peuvent ainsi notamment être visuels (couleurs, luminosité, clignotement...), comme dans l'exemple de mode de réalisation mentionné ci-dessus, mais également sonores, odorants, tactiles (vibration, déplacement...), etc.

Dans au moins un mode de réalisation particulier de l'invention, un tel procédé comprend une étape d'association à au moins un desdits correspondants d'au moins une préférence, et ladite étape de génération génère au moins un stimulus spécifique, en fonction de ladite ou desdites préférences et de ladite commande.

Ainsi, on peut personnaliser la forme de restitution de l'information d'état (une couleur ou un signal sonore, par exemple) pour chaque correspondant ou pour un ou plusieurs ensembles de correspondants, en fonction des préférences qui leur sont associées. Ces préférences peuvent notamment appartenir au groupe comprenant :
- l'identité desdits correspondants ;
- la forme de ladite restitution.

Ainsi, selon les préférences de l'utilisateur, chaque correspondant peut être ou non reconnu à partir de son identifiant (pseudonyme par exemple) d'une part, et, d'autre part, la forme de restitution d'une entité peut être personnalisée en fonction du correspondant.

La restitution de l'information d'état par une entité affectée à un correspondant peut être mise en oeuvre sous la forme, par exemple :
- d'un affichage d'images fixes et/ou animées prédéfinies ;
- d'une mise dans une position prédéterminée d'au moins une partie mobile de l'entité ;
- d'une mise dans un état prédéterminé d'au moins une partie de l'entité ;
- d'un éclairage d'au moins une partie de l'entité ;
- d'une restitution sonore et/ou vocale ;
- d'une diffusion d'une information olfactive ;
- d'une restitution tactile ;
- d'une restitution gustative.

Selon un aspect particulier de l'invention, ledit état est un état de disponibilité appartenant au groupe comprenant :
- non connecté ;
- connecté et non disponible ;
- connecté et disponible ;
- indéterminé.

Ainsi, comme déjà indiqué, un tel état de disponibilité permet de renseigner un utilisateur sur la connexion et la disponibilité effective de ses correspondants. Les situations où cette information n'est pas accessible, par exemple lors d'une rupture de communication dans le ou les réseaux de communication avec une plateforme de messagerie instantanée incluant le dispositif de collecte automatique d'informations d'état, peuvent correspondre à l'état « indéterminé », ou à des états spécifiques.

Selon un aspect particulier de l'invention, ladite étape d'obtention comprend une étape d'interrogation d'un serveur dédié, alimenté par au moins une plateforme de messagerie instantanée et/ou au moins un dispositif de restitution tiers et/ou au moins un serveur de contrôle d'un réseau de radiocommunication.

Ainsi, il est possible d'obtenir des informations d'état auprès de diverses sources, par l'intermédiaire de ce serveur dédié, par exemple pour une mise à jour régulière de la configuration de l'entité, en fonction, notamment, de l'encombrement du réseau et/ou de la proximité de la source. Selon d'autres modes de réalisation, ces informations d'état peuvent également être obtenues auprès d'un autre dispositif, ou prendre en compte une disponibilité sur un réseau de GSM, par exemple.

L'invention concerne également un dispositif, sans écran d'ordinateur, de restitution d'informations d'état relatives à au moins deux correspondants d'un utilisateur, permettant la mise en oeuvre du procédé décrit ci-dessus.

Selon l'invention, un tel dispositif comprend :
- au moins deux entités de restitution affectées chacune à un desdits correspondants, et comprenant des moyens de génération d'au moins un stimulus représentatif d'un état du correspondant auquel elle est affectée pour informer ledit utilisateur de l'état du correspondant;
- des moyens de délivrance à chacune desdites entités d'au moins une commande de génération d'un stimulus, chaque commande étant obtenue par transformation d'une information d'état relative à un correspondant et obtenue au moyen d'au moins un dispositif de collecte automatique d'informations d'état.

Ainsi, l'information d'état de chacun des correspondants est restituée sur des entités distinctes et attribuées chacune individuellement à un correspondant choisi par l'utilisateur, tout changement d'affectation étant cependant rendu possible par le dispositif.

L'invention propose donc un nouveau moyen de restitution à un utilisateur d'informations d'état, par exemple des informations relatives à la disponibilité sur un réseau, qui permet audit utilisateur de s'affranchir de la présence d'un ordinateur et en particulier de son écran.

Dans au moins un mode de réalisation particulier de l'invention, un tel dispositif de restitution comprend des moyens d'obtention de ladite information d'état dudit correspondant et/ou de ladite commande auprès d'au moins un élément appartenant au groupe comprenant :
- les plateformes de messagerie instantanée ;
- les terminaux ;
- les passerelles de réseau ;
- les dispositifs de restitution tiers ;
- les serveurs de radiocommunication.

Ainsi, un tel dispositif peut obtenir, selon les cas, l'information d'état et/ou la commande auprès d'une ou plusieurs sources diversifiées. Ces informations peuvent par exemple lui être transmises suivant des liaisons informatiques, filaires ou non, ou radio ou encore suivant une combinaison de ces dernières, ce qui permet d'assurer la restitution en tout lieu et circonstance. Ceci peut se révéler utile notamment si une entité du dispositif est placée dans un endroit non couvert par une liaison sans fil ou par des ondes radio, ou suffisamment éloigné d'un terminal pour qu'une liaison filaire soit inadéquate au regard de la longueur de câble à déployer.

Dans le cas où le dispositif reçoit à partir d'une des sources précitées uniquement une information d'état, par exemple une information de disponibilité, on prévoit également que ce dispositif comprenne, ou coopère avec, des moyens de transformation de l'information d'état en une commande appropriée.

En permettant à un tel dispositif de recevoir des trames simples contenant spécifiquement ces informations, c'est-à-dire propres au service auquel il est dédié, on fiabilise et simplifie son fonctionnement.

Selon un autre aspect particulier de l'invention, un des dispositifs décrits ci-dessus met en oeuvre une base de données d'au moins une préférence associée à au moins un desdits correspondants, et lesdits moyens de génération sélectionnent et/ou configurent au moins un stimulus en fonction de ladite ou desdites préférences et de ladite commande.

Ainsi, le dispositif s'appuie sur une base de données pour personnaliser le mode de restitution de l'entité affectée à chacun des correspondants.

Selon encore un mode de réalisation particulier de l'invention, lesdites au moins deux entités sont identiques (à l'exception, le cas échéant, d'une caractéristique distinctive, telle que la couleur de l'habillage).

Ainsi, on dispose d'un dispositif très simple, dont les entités peuvent être remplacées séparément, par exemple si elles sont endommagées ou défectueuses. Il est également possible de prévoir que l'on puisse ajouter, retirer ou déplacer une entité.

Dans ce cas notamment, lesdites entités peuvent former une guirlande lumineuse. Ainsi le dispositif présente un aspect décoratif, lui permettant d'être aisément intégré dans l'environnement quotidien de l'utilisateur. D'autres présentations (par exemple sous forme de bouquets) sont bien sûr possibles.

Selon une caractéristique particulière de l'invention, le nombre d'états est restreint, et est par exemple égal à quatre.

Ainsi, l'interprétation de l'information d'état est simple, intuitive et suffisante pour l'utilisateur.

Selon un autre mode de réalisation de l'invention, ledit dispositif de restitution peut représenter une habitation dont chaque entité correspond à une ouverture et/ou un étage.

Un tel dispositif est par exemple destiné aux enfants ou aux adolescents vivant en milieu urbain qui désirent rester en permanence en contact avec leurs groupes d'amis ou de voisins. D'autres représentations selon la même approche (représentation d'un système planétaire, d'un pays...) sont bien sûr envisageables.

Selon encore un autre mode de réalisation particulier de l'invention, au moins une desdites entités comprend des moyens appartenant au groupe comprenant :
- des moyens d'accrochage ;
- des moyens de communication sans fil ;
- des moyens autonomes d'alimentation en énergie.

Ainsi, cette unité dispose d'une part d'un fonctionnement autonome par rapport aux autres entités des moyens de restitution, et, d'autre part, peut être séparée des autres unités et déplacée indépendamment ou encore appariée avec celles-ci par accrochage.

L'invention concerne aussi un serveur de gestion d'informations d'état relatives à une pluralité de correspondants.

Selon l'invention, un tel serveur de gestion comprend :
- des moyens d'obtention, au moyen d'au moins un dispositif de collecte automatique de telles informations, d'au moins une information d'état représentative d'un état d'au moins un desdits correspondants et/ou d'au moins une préférence associée à au moins un desdits correspondants ;
- des moyens de stockage de ladite ou desdites informations d'état et/ou de ladite ou desdites préférences dans au moins une base de données ;
- des moyens de transmission d'au moins une information d'état et/ou d'au moins une desdites préférences vers au moins un dispositif de restitution d'informations d'état relatives à au moins deux correspondants.

Ainsi, un dispositif de restitution selon l'invention peut mettre à jour l'information d'état, par exemple d'un état de disponibilité, et/ou les préférences associées des correspondants en interrogeant ce serveur.

La base de données d'un tel serveur peut notamment être obtenue par réplication de tables d'une base de données générale d'informations d'état hébergée, par exemple, sur une plateforme de messagerie instantanée.

L'invention concerne encore un produit programme d'ordinateur téléchargeable depuis un réseau de communication et/ou stocké sur un support lisible par ordinateur et/ou exécutable par un microprocesseur, comprenant des instructions de code de programme pour l'exécution de tout ou partie des étapes des procédés de restitution d'informations d'état d'au moins deux correspondants tels que décrits ci-dessus, lorsqu'il est exécuté sur un ordinateur.

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- la figure 1, présente un mode de réalisation de l'invention dans lequel le dispositif de restitution de l'invention met en oeuvre une guirlande lumineuse ;
- la figure 2 illustre un environnement fonctionnel du dispositif de la figure 1 au sein d'un réseau de communication permettant de mettre en oeuvre le procédé selon l'invention ;
- la figure 3 détaille les éléments pris en charge par un module de gestion de la guirlande présentée à la figure 1 ;
- la figure 4A illustre les étapes exécutées par le module de gestion de la figure 3 lors de la mise à jour des informations de configuration de la guirlande ;
- la figure 4B présente la séquence des étapes d'actualisation de la commande d'éclairage de la guirlande ;
- la figure 5 illustre un autre mode de réalisation de l'invention, dans lequel le dispositif de l'invention représente un immeuble ; et
- la figure 6 illustre, de façon schématique, le principe général du procédé de l'invention.

Conformément à la description qui précède, l'invention permet notamment d'indiquer au moyen d'un ou plusieurs objets communicants, et sous une forme pouvant être appréhendée de façon simple et intuitive, d'une part, si des correspondants qu'un utilisateur a sélectionnés sont « en ligne », ou en d'autres termes connectés à une plateforme de messagerie instantanée prédéterminée, et d'autre part, pour chaque correspondant « en ligne », si celui-ci est disponible pour débuter une communication. Pour que l'objet communicant restitue l'information d'état, et en l'occurrence l'état de disponibilité, des correspondants, il n'est pas nécessaire que cet objet soit relié à un terminal ordinateur, ou qu'un ordinateur soit allumé ou activé et connecté à une passerelle de communication avec le réseau externe à la sphère domestique, encore appelée passerelle de réseau par contraction. Dans un mode de réalisation particulier appréciable, l'utilisateur d'un dispositif mettant en oeuvre le procédé selon l'invention peut en outre avoir accès à la disponibilité des contacts connectés sous des formes de restitution intuitives et/ou paramétrables.

Dans ce contexte, un mode de réalisation de l'invention consiste à mettre en oeuvre dans un réseau de communication informatique un procédé de restitution d'une information d'état de type état de disponibilité d'au moins deux correspondants, notamment par le biais d'une indication visuelle.

L'invention peut s'inscrire notamment dans un contexte de diversification des offres de services aux particuliers utilisateurs de l'Internet, aux utilisateurs de téléphones mobiles dans un réseau utilisant le protocole d'échange GPRS (pour littéralement « standard de téléphonie avec transfert globale de données par paquets », ou « Global Packet Radio Service » en anglais) ou d'appareils transmettant des données GPS (système de géolocalisation par satellite, ou « Global positioning System » en anglais) en corrélant, par exemple, l'indication de la vitesse de déplacement d'un utilisateur à sa disponibilité, de façon à détecter notamment des situations dans lesquelles cet utilisateur serait au volant d'un véhicule, auquel cas il serait alors préférable de ne pas chercher à communiquer avec lui pour des raisons évidentes de sécurité.

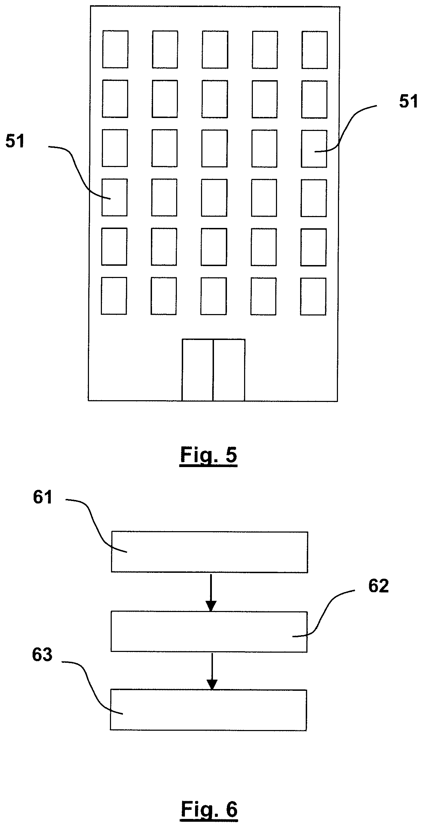

Comme illustré par la figure 6, le procédé de l'invention comprend donc principalement les opérations suivantes :
- le dispositif de restitution, ou la passerelle ou le terminal auquel il est relié, obtient (61) une information représentative de l'état de disponibilité des différents correspondants suivis par le dispositif au moyen d'un dispositif de collecte automatique d'informations d'état en interrogeant par exemple une plateforme de messagerie instantanée incluant un tel dispositif (et le cas échéant d'autres sources d'information) ;
- la passerelle, le terminal ou le dispositif de restitution directement, transforme (62) chaque information d'état, telle que par exemple un état de disponibilité, en une commande apte à piloter une entité de restitution du dispositif de restitution ;
- chaque entité reçoit la commande qui lui est destinée, et génère (63) au moins un stimulus représentatif de l'état du correspondant auquel elle est affectée.

Par la suite, on présente essentiellement le cas d'une mise en oeuvre de l'invention par un dispositif de restitution d'informations d'état, du type états de disponibilité, prenant la forme d'une guirlande lumineuse, faisant correspondre une entité lumineuse à chaque correspondant d'une liste prédéterminée de correspondants. Ainsi l'utilisateur peut interpréter directement l'état de connexion et la disponibilité de ses correspondants en fonction de sa perception de l'indication lumineuse des entités leur étant affectées sur la guirlande. Une telle guirlande est notamment destinée à s'intégrer dans le domicile de l'utilisateur, y compris dans les pièces à vivre, en la branchant, par exemple, sur une prise de courant. La guirlande, ou une ou plusieurs entité(s) de la guirlande, peut si besoin être déplacée d'une pièce à une autre, et/ou participer à la décoration d'une pièce.

Il est clair cependant que l'invention ne se limite pas à cette application particulière, mais peut également être mise en oeuvre dans de nombreux autres domaines, et par exemple peut conduire à l'émergence d'usages non identifiés à l'avance, voire de nouveaux services.

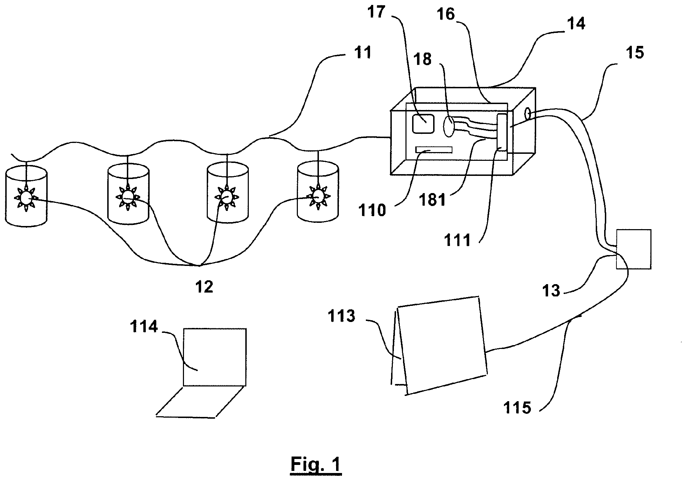

On présente donc, en relation avec la figure 1, un mode de réalisation du procédé permettant d'utiliser l'objet décoratif se présentant sous forme d'une guirlande 11 en tant que dispositif de restitution d'un état de disponibilité des correspondants d'un utilisateur.

Sur la guirlande 11, chaque correspondant est associé à une entité de restitution 12, prenant par exemple la forme d'un élément lumineux portant une (ou plusieurs) diode(s) multi-luminescente(s) qui change(-nt) de couleur, une couleur correspondant à un stimulus, ou état de restitution, en fonction de l'état de disponibilité du correspondant qui lui a été affecté. Trois couleurs, personnalisables par l'utilisateur, permettent d'indiquer si le correspondant est respectivement déconnecté, connecté mais non disponible, connecté et disponible. Ces couleurs peuvent être par exemple respectivement le bleu, le rouge et le vert. Une quatrième couleur, par exemple le blanc (ou l'extinction de la diode), est prévue également pour indiquer que l'état de disponibilité du correspondant ne peut pas être déterminé.

Chaque entité peut être équipée de moyens d'identification passifs, par exemple par insertion du nom ou d'une photo de chaque correspondant. Les entités peuvent être toutes identiques (à l'exception, par exemple, de leur couleur), pour fournir un aspect esthétique intéressant.

La guirlande 11 peut être placée par l'utilisateur dans une pièce de son choix, en la branchant sur une prise de courant 13, et permet ainsi à l'utilisateur d'embrasser en un seul coup d'oeil l'état de disponibilité de l'ensemble de ses correspondants.

La guirlande comprend un bloc d'alimentation 14 relié à un câble électrique 15 et monté sur une carte de circuit intégré 16 sur laquelle sont fixés :
- un bloc d'alimentation des diodes 17 ;
- un microcontrôleur 18 transmettant une commande au bloc d'alimentation des diodes par un bus 181, par exemple de type I²C (pour « Inter IC Communication », en anglais) après avoir converti l'information reçue pour la transmettre vers chaque adresse du bloc d'alimentation et permettant donc ainsi de piloter l'allumage des diodes ;
- une barrette mémoire 110 ;
- un port de communication entrée/sortie 111.

La mise en oeuvre d'un microcontrôleur et d'un bus le reliant au bloc d'alimentation 17 permet de piloter séparément chaque entité de la guirlande par l'intermédiaire d'un courant porteur circulant dans le réseau électrique, ce courant pouvant être transmis au travers d'un seul conducteur.

Le port de communication 111 permet de connecter la guirlande à une passerelle de communication domestique 113 (par exemple une « Livebox » (marque déposée)), pour mettre à jour la configuration de la guirlande, les données de paramétrage de la guirlande étant émis par un ordinateur 114 vers la passerelle 113. Par «paramétrer», on entend ici, par exemple, ajouter ou supprimer un ou plusieurs correspondant(s), attribuer une entité ou retirer l'attribution d'une entité à un correspondant, ou encore modifier les préférences associées à chaque correspondant, telles que, par exemple, le code couleur d'un ou de plusieurs correspondant(s).

La barrette mémoire 110 permet d'autre part de stocker les informations relatives à l'état de disponibilité des correspondants et aux données de paramétrage choisies pour les correspondants (nombre de correspondants représentés par la guirlande, liste d'attribution des diodes, identité des correspondants, code de couleur pour chaque entité).

Un adaptateur de type « Courant Porteur en Ligne » (CPL) 115 connecté à la passerelle 111 permet de transmettre l'état de disponibilité, ou des commandes correspondantes, et les données de paramétrage à la guirlande 11 par l'intermédiaire du réseau électrique jusqu'au port 111. Dans une variante de ce mode de réalisation, le port 111 peut être également relié à un module de communication au réseau local sans fil, par exemple via une liaison « wifi » (pour « wireless fidelity » en anglais).

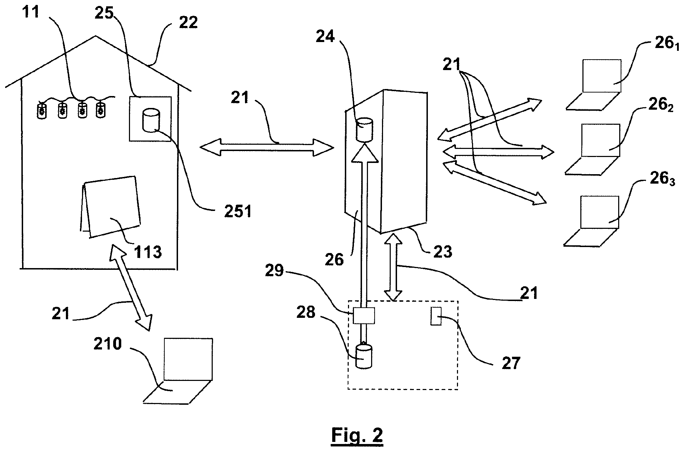

La figure 2 illustre le fonctionnement d'un système mettant en oeuvre les étapes du procédé selon l'invention au travers d'un réseau de communication.

L'utilisateur est connecté au réseau Internet 21 à son domicile 22 par l'intermédiaire de la passerelle de communication 113. La passerelle 113 permet de communiquer via le réseau 21 avec un serveur de disponibilité 23 contenant une base de données 24 de stockage de comptes d'utilisateurs d'un service d'Instant Messaging et le cas échéant de préférences de chaque utilisateur (identité du correspondant, code couleur associé aux états de disponibilité du correspondant, et plus généralement de la forme de la restitution dans des variantes de ce mode de réalisation où plusieurs formes de restitution sont prévues).

Ainsi, lorsque la passerelle 113 adresse au serveur 23, à intervalles réguliers prédéterminés ou sur instruction de l'utilisateur, une requête de demande des états de disponibilité des correspondants suivis par le dispositif de restitution, la liste des correspondants et le cas échéant des préférences qui leur sont associées est transmise par le serveur 23 à la passerelle 113 qui retransmet ces données vers un module 25 de gestion de la guirlande.

Les préférences peuvent être gérées localement, par le module 25, et/ou au niveau du serveur 23. Ainsi, l'utilisateur peut choisir, localement, d'affecter une couleur à un correspondant ou à un état. Il est également possible que le correspondant se caractérise lui-même, par une couleur, une image, un son... Tout ou partie de ces préférences peuvent être stockées par le serveur 23.

Le module 25 comprend donc une base de données 251 permettant de conserver la liste des correspondants et des préférences qui leur sont associées dans des tables dynamiques afin de garantir le fonctionnement de la guirlande en cas, par exemple, de rupture de la communication avec le réseau externe 21, et sans qu'il soit nécessaire de connecter un ordinateur pour assurer la gestion du fonctionnement de la guirlande.

Les données concernant l'état de disponibilité des correspondants ayant accepté d'être suivis par le service d'Instant Messaging, et dont les ordinateurs ou les passerelles 26₁ à 26₃ sont connectés ou non à la plateforme d'Instant Messaging, sont collectées par la plateforme dédiée 26, qui gère des applications d'interrogation 27 des ordinateurs 26₁ à 26₃. Ces données sont alors stockées par la plateforme 26 dans une base de données d'Instant Messaging 28 et dupliquées dans la base de données 24 du serveur 23 par l'intermédiaire d'une application de réplication 29.

La mise à jour de la liste des correspondants, de leurs états de disponibilité et des préférences qui leur sont associées par l'utilisateur au sein du module de gestion 25 s'effectue en interrogeant la plateforme 26 au moyen d'un ordinateur 210, domestique ou distant, auquel la plateforme 26 transmet ces données par retour. L'ordinateur 210 transmet ensuite les données mises à jour au module 25 par l'intermédiaire de la passerelle 113.

En outre, une page informatique spécifique de paramétrage, en mode hypertexte ou en mode objet, accessible par l'ordinateur 210, peut permettre d'ajouter ou de supprimer des correspondants sur les branches de la guirlande, ou de modifier le code des couleurs attribué aux états de disponibilité d'un ou de plusieurs correspondants, de façon conviviale. Cette page permet de prévisualiser l'éclairage de la guirlande et offre la possibilité de rétablir le code couleur défini par défaut pour chaque correspondant en cliquant sur un pictogramme. Un renvoi automatique vers cette page spécifique de paramétrage peut être prévu sur une page du site Internet de la plateforme, dédiée au paramétrage de la guirlande directement à partir de la plateforme.

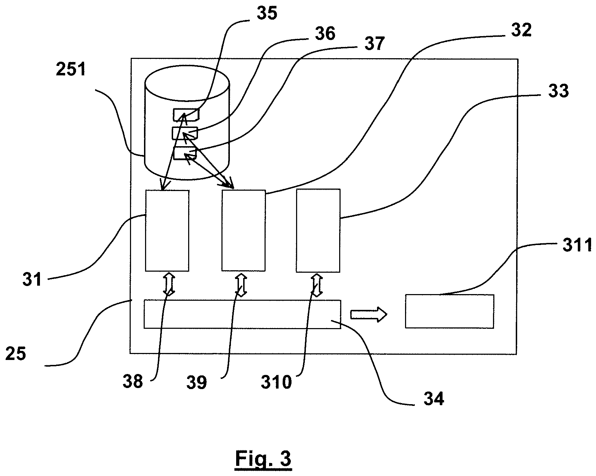

La figure 3 précise le fonctionnement du module 25. Ce module 25 porte notamment trois applications 31, 32, 33 de gestion de l'interface avec respectivement le réseau externe 21 et plus particulièrement avec le serveur 23, la carte de commande de la guirlande, et la base de données 251 contenant les informations fonctionnelles relatives au paramétrage de la guirlande, et une application d'administration des tâches 34 pour le contrôle, l'activation ou la synchronisation des applications 31, 32, 33 entre elles.

Dans ce mode de réalisation, les applications 31 et 32 sont configurées pour partager les mêmes ressources matérielles, et en particulier les ressources dédiées à la gestion des informations provenant du réseau ou émises via le réseau, telles qu'une pile basée sur le protocole de transport et d'adressage Internet TCP/IP (de l'anglais « Transmission Control Protocol/Internet Protocol »).

Ainsi, sur commande de l'application d'administration des tâches 34, l'état de disponibilité des correspondants, éventuellement identifiés par des pseudonymes, est récupéré à intervalles réguliers, par exemple avec une temporisation de dix minutes dans ce mode de réalisation. Cette opération est assurée par l'intermédiaire de l'application 31 sur le serveur 23 pour mettre à jour la sauvegarde de l'état de disponibilité de chaque correspondant dans les champs de table 35 de la base de données 251. Les informations, ou données, fonctionnelles de paramétrage de la guirlande, gérées par l'application 33, sont par ailleurs stockées dans la base de données 251 respectivement :
- dans les champs de la table 36 pour les données indiquant la correspondance entre d'une part les entités, identifiées chacune par une adresse du bus 181, et d'autre part les correspondants, éventuellement désignés par leur pseudonyme ; et
- dans les champs de la table 37 pour les données relatives aux couleurs associées à un état de disponibilité pour chaque correspondant.

Sur requête de l'ordinateur 210, l'application 32 procède à la mise à jour des données fonctionnelles des tables 36 et 37. D'autre part, lorsque l'ordinateur 210 émet un avertissement vers l'application 32 pour indiquer qu'un ou plusieurs correspondant(s) a(ont) été supprimé(s) ou a(ont) eu son(leurs) identité(s) modifiée(s) dans la base de données 24, ou pour fournir un nouveau paramétrage de la période de mise à jour de la table 35, l'application 32 transmet ces informations à l'application d'administration des tâches 34 qui gère l'application 31, de façon à mettre à jour la table 35. En outre, l'application 32 peut émettre vers l'ordinateur 210, par retour, un ou plusieurs message(s) de confirmation ou inversement un ou plusieurs message(s) d'erreur après chaque tentative de mise à jour des tables 35 à 37.

L'application maître 34 contrôlant les applications 31 à 33 (ce contrôle est représenté par les doubles flèches 38, 39 et 310) peut également activer une application 311 de gestion des entrées/sorties de la guirlande. Cette application est notamment destinée à émettre des signaux de commande sortants, par exemple, vers l'interrupteur marche/arrêt de la guirlande ou vers un variateur d'intensité lumineuse, ou à surveiller par scrutation de ses entrées si l'état de l'interrupteur ou du variateur a été modifié. Dans ce mode de réalisation, l'application 311 fonctionne en mode asynchrone.

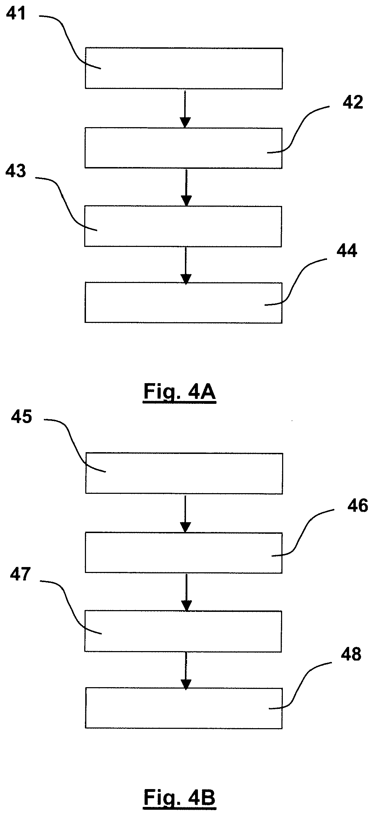

La figure 4A illustre les étapes mises en oeuvre dans le module 25 lors de la mise à jour des informations de configuration de la guirlande.

Cette mise à jour se déroule en quatre étapes successives représentées sur la figure 4A par des blocs désignés par les références 41 à 44.

Dans une première étape 41, l'application 32 reçoit de l'ordinateur 210 une requête de mise à jour des données de paramétrage pouvant comprendre :
- l'ajout d'un correspondant et la notification de la diode lui ayant été attribuée ;
- la suppression d'un correspondant ;
- la modification de la couleur associée à un état de disponibilité d'un correspondant, ou, en d'autres termes, d'un état de restitution prédéfini de l'entité ;
- la modification de l'identité d'un correspondant ou de son pseudonyme par suppression du correspondant puis ajout de l'identité modifiée et désignation de la diode lui étant attribuée.

Dans une deuxième étape 42, à partir des informations reçues, l'application 32 met à jour les tables 36 et 37.

L'application 32 transmet ensuite à l'application 34, dans une troisième étape 43, une liste des correspondants à supprimer ou à ajouter ou dont l'identité doit être modifiée, accompagnée des états actualisés de disponibilité de l'ensemble des correspondants.

Dans une quatrième étape 44, l'application 34 retransmet cette liste à l'application 31 qui procède à la mise à jour de la table 35.

La séquence des étapes d'actualisation de la commande d'éclairage de la guirlande selon une périodicité réglable par l'utilisateur est précisée par la figure 4B.

L'application d'administration des tâches 34 active dans une première étape 45 l'application 31 de façon à transmettre au serveur 23 une requête d'émission des informations rassemblant la mise à jour des états de disponibilité des correspondants.

Dans une deuxième étape 46, l'application 31 reçoit ces informations du serveur 23 et opère la mise à jour de la table 35.

L'application 31 notifie ensuite à l'application 34 que l'étape 46 est achevée, dans une troisième étape 47.

Dans une quatrième étape 48, l'application 34 active l'application 33 qui forme un signal de commande en interrogeant les champs des tables 35 à 37 mises à jour et transmet ce signal via le bus 181 au bloc d'alimentation 18 de la guirlande 11.

On considère par la suite un exemple où l'utilisateur de la guirlande ne possède pas d'ordinateur à son domicile et paramètre les préférences associées à la guirlande en utilisant un ordinateur distant.

Dans cet autre mode de réalisation particulier de l'invention, il peut être envisagé de mettre à disposition de l'utilisateur une interface de paramétrage via un accès sécurisé sur un site Internet dédié, hébergé sur une plateforme de services d'Instant Messaging composée d'un ou de plusieurs serveurs.

Suivant des préférences de l'utilisateur, il peut être envisagé dans un mode de réalisation complémentaire de l'invention, de remplacer le changement de couleur par une séquence de clignotements de la diode de fréquence prédéterminée.

Dans un mode de réalisation de l'invention complémentaire, il peut être prévu d'ajouter ou de retirer une ou plusieurs entités ou branches de la guirlande. De telles entités détachables comprennent avantageusement des moyens d'accrochage aux autres entités, une clé wifi, et une alimentation autonome en énergie.

On peut également prévoir de munir la guirlande d'un interrupteur marche/arrêt et d'un variateur électrique pour moduler l'intensité d'éclairement de tout ou partie des diodes de la guirlande.

Il peut également être envisagé de remplacer le bus de liaison entre le microcontrôleur d'interruption programmable PIC (de l'anglais « Programmable Interrupt Controller ») par un montage en étoile entre le PIC et chaque diode.

Dans un mode de réalisation particulier de l'invention, le dispositif mettant en oeuvre les étapes du procédé selon l'invention peut être un téléphone portable.

Dans encore un autre mode de réalisation particulier, le dispositif mettant en oeuvre les étapes du procédé selon l'invention peut également permettre d'afficher l'humeur des correspondants sous une forme appréhendable intuitivement, en ajustant par exemple une fréquence de clignotement des diodes.

Il convient également de noter que, dans un autre mode de réalisation particulier, il peut être prévu que chaque entité de la guirlande associée à une diode, alors pourvu d'un bloc alimentation de la diode, d'un port entrée-sortie spécifique permettant le raccordement de moyens de communication sans fil, puisse être séparée des autres éléments de la guirlande pour, par exemple, être placée dans une autre pièce de l'habitation.

Dans des variantes du mode de réalisation décrit ci-dessus de façon détaillée, il peut encore être prévu que :
- les informations relatives à l'état de disponibilité et/ou aux préférences associées aux correspondants soient transmises au module de gestion du dispositif de restitution à partir d'un serveur de radiocommunication, notamment par le réseau de groupe spécial mobile GSM (de l'anglais « Global System for Mobile communication ») ou le réseau GPRS, ou par l'intermédiaire d'un dispositif de restitution tiers (tel qu'une autre guirlande, par exemple) ;
- les diodes puissent prendre une cinquième couleur indiquant que le correspondant n'est pas connecté au service de messagerie instantanée, mais est disponible pour être joint via un réseau de radiocommunication ;
- des bandes son, de la vidéo et/ou des images puissent être chargées sur le dispositif de restitution pourvu d'un ou de plusieurs écran(s) et haut-parleur(s) pour leur diffusion ;

Plus généralement, l'approche de l'invention peut permettre de définir de nombreux types de dispositifs de restitution, dont les entités sont contrôlables de façon à restituer des informations d'état, telles que par exemple des états de disponibilité, sous la forme de stimuli variés, le cas échéant utilisés en combinaison :
- aspects visuels (lumière, couleur, clignotement...) ;
- aspects sonores (sons, messages, musique...) ;
- aspects multimédia (photos, images, vidéos,...) ;
- aspects olfactifs ou gustatifs (diffusion d'odeurs...) ;
- aspects tactiles ou mobiles (vibrations, objets animés...).

Comme illustré en figure 5, le dispositif de restitution peut prendre des formes représentatives d'un décor, par exemple un immeuble ou plus généralement une habitation, dans lequel chaque ouverture (et/ou étage) est associée à une entité affectée à un correspondant. Dans ce cas, chaque ouverture 51 se comporte comme une des entités 12 de la guirlande décrite précédemment.

## Revendications

1. Procédé de restitution d'informations d'état relatives à au moins deux correspondants d'un utilisateur, le procédé mis en oeuvre par un dispositif de restitution sans écran d'ordinateur comprend les étapes suivantes :
- obtention (61) d'une information d'état représentative d'un état d'au moins un desdits correspondants, au moyen d'au moins un dispositif de collecte automatique d'informations d'état ;
- transformation (62) de l'information d'état obtenue en une commande apte à piloter un dispositif de restitution comprenant au moins deux entités physiques distinctes affectées chacune à un desdits correspondants, en utilisant une base de données;
- génération (63), par une desdites entités, d'au moins un stimulus représentatif de l'état du correspondant auquel elle est affectée, en fonction de la commande correspondante, pour informer ledit utilisateur de l'état dudit au moins un correspondant.

2. Procédé de restitution selon la revendication 1, **caractérisé en ce qu'**il comprend une étape d'association à au moins un desdits correspondants d'au moins une préférence,
et **en ce que** ladite étape de génération génère au moins un stimulus spécifique, en fonction de ladite ou desdites préférences et de ladite commande.

3. Procédé de restitution selon la revendication 2, **caractérisé en ce que** ladite au moins une préférence appartient au groupe comprenant :
- identité desdits correspondants ;
- forme de ladite restitution.

4. Procédé de restitution selon l'une quelconque des revendications 1 à 3, **caractérisé en ce que** ledit état est un état de disponibilité appartenant au groupe comprenant :
- non connecté ;
- connecté et non disponible ;
- connecté et disponible ;
- indéterminé.

5. Procédé de restitution selon l'une quelconque des revendications 1 à 4, **caractérisé en ce que** ladite étape d'obtention comprend une étape d'interrogation d'un serveur dédié, alimenté par au moins une plateforme de messagerie instantanée et/ou au moins un dispositif de restitution tiers et/ou au moins un serveur de contrôle d'un réseau de radiocommunication.

6. Dispositif, sans écran d'ordinateur, de restitution d'informations d'état relatives à au moins deux correspondants d'un utilisateur, le dispositif sans écran d'ordinateur comprend :
- au moins deux entités physiques distinctes de restitution affectées chacune à un desdits correspondants, en utilisant une base de données, et comprenant des moyens de génération d'au moins un stimulus représentatif d'un état du correspondant auquel elle est affectée pour informer ledit utilisateur de l'état du correspondant ;
- des moyens de délivrance à chacune desdites entités d'au moins une commande de génération d'un stimulus, chaque commande étant obtenue par transformation d'une information d'état relative à un correspondant et obtenue au moyen d'au moins un dispositif de collecte d'informations d'état.

7. Dispositif de restitution selon la revendication 6, **caractérisé en ce qu'**il met en oeuvre une base de données d'au moins une préférence associée à au moins un desdits correspondants,
et **en ce que** lesdits moyens de génération sélectionnent et/ou configurent au moins un stimulus en fonction de ladite ou desdites préférences et de ladite commande.

8. Dispositif de restitution selon l'une quelconque des revendications 6 et 7, **caractérisé en ce que** lesdites entités sont identiques.

9. Dispositif de restitution selon la revendication 8, **caractérisé en ce que** lesdites entités forment une guirlande lumineuse.

10. Dispositif de restitution selon l'une quelconque des revendications 6 à 8, **caractérisé en ce que** ledit dispositif de restitution représente une habitation dont chaque entité correspond à une ouverture et/ou un étage.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de restitution d'informations d'état selon l'une des revendications 1 à 5, lorsqu'il est exécuté sur un ordinateur.

## Patentansprüche

1. Verfahren zur Wiedergabe von Zustandsinformationen, die sich auf wenigstens zwei Korrespondenzpartner eines Benutzers beziehen, wobei das Verfahren, das von einer Wiedergabevorrichtung ohne Computerbildschirm durchgeführt wird, die folgenden Schritte umfasst:
- Gewinnung (61) einer Zustandsinformation, die für einen Zustand wenigstens eines der Korrespondenzpartner repräsentativ ist, mittels wenigstens einer Vorrichtung zur automatischen Beschaffung von Zustandsinformationen;
- Umwandlung (62) der gewonnenen Zustandsinformation in einen Befehl, der geeignet ist, eine Wiedergabevorrichtung vorzusteuern, die wenigstens zwei verschiedene physische Entitäten umfasst, die jeweils einem der Korrespondenzpartner zugewiesen sind, unter Verwendung einer Datenbank;
- Erzeugung (63), durch eine der Entitäten, wenigstens eines Stimulus, der für den Zustand des Korrespondenzpartners, dem sie zugewiesen ist, repräsentativ ist, in Abhängigkeit von dem entsprechenden Befehl, um den Benutzer über den Zustand dieses wenigstens einen Korrespondenzpartners zu informieren.

2. Verfahren zur Wiedergabe nach Anspruch 1, **dadurch gekennzeichnet, dass** es einen Schritt der Zuordnung, zu wenigstens einem der Korrespondenzpartner, wenigstens einer Präferenz umfasst,
und dadurch, dass der Schritt der Erzeugung wenigstens einen spezifischen Stimulus in Abhängigkeit von der oder den Präferenzen und dem Befehl erzeugt.

3. Verfahren zur Wiedergabe nach Anspruch 2, **dadurch gekennzeichnet, dass** die wenigstens eine Präferenz der Gruppe angehört, welche umfasst:
- Identität der Korrespondenzpartner,
- Form der Wiedergabe.

4. Verfahren zur Wiedergabe nach einem der Ansprüche 1 bis 3, **dadurch gekennzeichnet, dass** der Zustand ein Verfügbarkeitszustand ist, welcher der Gruppe angehört, welche umfasst:
- nicht verbunden;
- verbunden und nicht verfügbar;
- verbunden und verfügbar;
- unbestimmt.

5. Verfahren zur Wiedergabe nach einem der Ansprüche 1 bis 4, **dadurch gekennzeichnet, dass** der Schritt der Gewinnung einen Schritt der Abfrage eines dedizierten Servers umfasst, der von wenigstens einer Instant-Messaging-Plattform und/oder wenigstens einer Dritt-Wiedergabevorrichtung und/oder wenigstens einem Kontrollserver eines Funkkommunikationsnetzes versorgt wird.

6. Vorrichtung, ohne Computerbildschirm, zur Wiedergabe von Zustandsinformationen, die sich auf wenigstens zwei Korrespondenzpartner eines Benutzers beziehen, wobei die Vorrichtung ohne Computerbildschirm umfasst:
- wenigstens zwei verschiedene physische Wiedergabeentitäten, die jeweils einem der Korrespondenzpartner zugewiesen sind, unter Verwendung einer Datenbank, und Mittel zur Erzeugung wenigstens eines Stimulus umfassen, der für einen Zustand des Korrespondenzpartners, dem sie zugewiesen sind, repräsentativ ist, um den Benutzer über den Zustand des Korrespondenzpartners zu informieren;
- Mittel zur Ausgabe, an jede der Entitäten, wenigstens eines Befehls zur Erzeugung eines Stimulus, wobei jeder Befehl durch Umwandlung einer Zustandsinformation gewonnen wird, die sich auf einen Korrespondenzpartner bezieht, und mittels wenigstens einer Vorrichtung zur Beschaffung von Zustandsinformationen gewonnen wird.

7. Vorrichtung zur Wiedergabe nach Anspruch 6, **dadurch gekennzeichnet, dass** sie eine Datenbank wenigstens einer Präferenz implementiert, die wenigstens einem der Korrespondenzpartner zugeordnet ist,
und dadurch, dass die Mittel zur Erzeugung wenigstens einen Stimulus in Abhängigkeit von der oder den Präferenzen und dem Befehl auswählen und/oder konfigurieren.

8. Vorrichtung zur Wiedergabe nach einem der Ansprüche 6 und 7, **dadurch gekennzeichnet, dass** die Entitäten identisch sind.

9. Vorrichtung zur Wiedergabe nach Anspruch 8, **dadurch gekennzeichnet, dass** die Entitäten eine Lichterkette bilden.

10. Vorrichtung zur Wiedergabe nach einem der Ansprüche 6 bis 8, **dadurch gekennzeichnet, dass** die Vorrichtung zur Wiedergabe eine Wohnung darstellt, wobei jede Entität einer Öffnung und/oder einer Etage entspricht.

11. Computerprogrammprodukt, welches von einem Kommunikationsnetz herunterladbar und/oder auf einem computerlesbaren Medium gespeichert und/oder von einem Mikroprozessor ausführbar ist, **dadurch gekennzeichnet, dass** es Programmcodeanweisungen zur Ausführung des Verfahrens zur Wiedergabe von Zustandsinformationen nach einem der Ansprüche 1 bis 5, wenn es auf einem Computer ausgeführt wird, umfasst.

## Claims

1. Method for rendering state information relating to at least two correspondents of a user, the method implemented by a rendering device without computer screen comprising the following steps:
- retrieval (61) of state information representative of a state of at least one of said correspondents, by means of at least one automatic state information collection device;
- transformation (62) of the state information retrieved into a command capable of driving a rendering device comprising at least two distinct physical entities each assigned to one of said correspondents, by using a database;
- generation (63), by one of said entities, of at least one stimulus representative of the state of the correspondent to which it is assigned, as a function of the corresponding command, to inform said user of the state of said at least one correspondent.

2. Rendering method according to Claim 1, **characterized in that** it comprises a step of association with at least one of said correspondents of at least one preference,
and **in that** said generation step generates at least one specific stimulus, as a function of said preference or preferences and of said command.

3. Rendering method according to Claim 2, **characterized in that** said at least one preference belongs to the group comprising:
- - identity of said correspondents;
- form of said rendering.

4. Rendering method according to any one of Claims 1 to 3, **characterized in that** said state is an availability state belonging to the group comprising:
- not connected;
- connected and unavailable;
- connected and available;
- indeterminate.

5. Rendering method according to any one of Claims 1 to 4, **characterized in that** said retrieval step comprises a step of interrogation of a dedicated server, supplied by at least one instant messaging platform and/or at least one third-party rendering device and/or at least one control server of a radio communication network.

6. Device, without computer screen, for rendering state information relating to at least two correspondent of a user, the device without computer screen comprising:
- at least two distinct physical rendering entities each assigned to one of said correspondents, by using a database, and comprising means for generating at least one stimulus representative of a state of the correspondent to which it is assigned to inform said user of the state of the correspondent;
- means for delivering to each of said entities at least one stimulus generation command, each command being retrieved by transformation of state information relating to a correspondent and retrieved by means of at least one state information collection device.

7. Rendering device according to Claim 6, **characterized in that** it implements a database of at least one preference associated with at least one of said correspondents,
and **in that** said generation means select and/or configure at least one stimulus as a function of said preference or preferences and of said command.

8. Rendering device according to either of one Claims 6 and 7, **characterized in that** said entities are identical.

9. Rendering device according to Claim 8, **characterized in that** said entities form a string of lights.

10. Rendering device according to any one of Claims 6 to 8, **characterized in that** said rendering device represents a residence of which each entity corresponds to an opening and/or a floor.

11. Computer program product that can be downloaded from a communication network and/or stored on a computer-readable medium and/or that can be executed by a microprocessor, **characterized in that** it comprises program code instructions for executing the state information rendering method according to one of Claims 1 to 5, when it is run on a computer.
